# EUROPEAN PATENT SPECIFICATION

(11) **EP 2 772 726 B1**
(45) Date of publication and mention of the grant of the patent: **10.04.2019**
(21) Application number: 13157148.1
(22) Date of filing: 28.02.2013
(51) Int. Cl.: G01C 21/36

(54) **REPOSITIONABLE GRAPHICAL CURRENT LOCATION INDICATOR**
NEU POSITIONIERBARER GRAPHISCHER STANDORTANZEIGER
INDICATEUR GRAPHIQUE D'EMPLACEMENT ACTUEL REPOSITIONNABLE

(43) Date of publication of application: 03.09.2014
(73) Proprietor: BlackBerry Limited, Waterloo, ON N2K 0A7 (CA)
(72) Inventor: BELLS, Matthew, Kanata, Ontario K2K 3K1 (CA)
(74) Representative: MERH-IP Matias Erny Reichl Hoffmann Patentanwälte PartG mbB

(56) References cited:
- JP-A- 2004 317 417
- US-A- 5 731 979
- US-A1- 2008 091 349
- US-A1- 2011 320 117
- US-A1- 2012 265 433

## Description

### TECHNICAL FIELD

The present technology relates generally to mobile devices and, in particular, to mobile mapping and navigation applications.

### BACKGROUND

Mobile devices may have position-determining subsystems that enable the device to determine its current position for navigation or other location-based services. This is commonly accomplished by incorporating into the mobile device a global navigation satellite system (GNSS) receiver such as a Global Positioning System (GPS) receiver. In most navigation applications, the current location of the mobile device is displayed on a map. In most conventional navigation applications, the map is displaced relative to a graphical current location indicator as the device moves. The current location indicator thus appears to be anchored to a fixed point onscreen, which is frequently the center of the map. When travelling in a generally constant direction, the onscreen map area behind the current location indicator is seldom of much utility to the user who is generally more interested in the map area that lies in the direction of travel.

US2008/091349 discloses a navigation method applied to a navigation device used to display navigation information according to a traveling direction of the navigation device. The navigation information frame displayed is dynamically adjusted according to the traveling direction of the device, and in particular, the display position of the current position and the display scale of a corresponding displayed section of the navigation map are dynamically adjusted, so as to provide much more navigating route information and the points of interest in the identical size display area of a navigation information.

JP 2004 317417 discloses a navigation device which is provided with a location detector for detection the location of the vehicle; a display device; and a control circuit for displaying a peripheral map of the vehicle on the display device with a vehicle mark indicating the location of the vehicle. The range of the map displayed on the display device is of a circular or fan-like shape having a circular part with the vehicle mark at an approximately center location. Therefore, since the distances between the display location of the vehicle mark and the circular part are equal, it is possible for an occupant of the vehicle to easily grasp a sense of relative distance to each point displayed on the map with reference to the circular part.

### BRIEF DESCRIPTION OF THE DRAWINGS

Further features and advantages of the present technology will become apparent from the following detailed description, taken in combination with the appended drawings, in which:
FIG. 1 is a depiction of a mobile device on which the present technology may be implemented, the depiction including a schematic depiction of some components of the mobile device;
FIG. 2 is a depiction of a mobile device displaying a navigation screen provided by a navigation application executing on the mobile device;
FIG. 3 depicts the shifting or displacement from a first map area to a partially overlapping second map area when the graphical current location indicator is repositioned;
FIG. 4 depicts an example of a mobile device displaying a map with a graphical current location indicator;
FIG. 5 depicts an example of a manual repositioning of the graphical current location indicator and the concomitant shifting of the viewable map area from the map first area to the second map area;
FIG. 6 depicts a two-scale map in which the forward map area is at a first zoom level and the rearward map area is a second zoom level;
FIG. 7 depicts an example of a mobile device receiving user input to relocate the boundary dividing the forward and rearward map areas;
FIG. 8 depicts an example of a mobile device according to the example of Fig.7 after the boundary has been relocated rearwardly;
FIG. 9 depicts an example of a mobile device receiving user input drawing a boundary between the forward and rearward map areas;
FIG. 10 depicts a mobile device displaying a navigation screen without any points of interest visible because all points of interest are beyond the first map area;
FIG. 11 depicts the automatic rearward repositioning of the graphical current location indicator and the concomitant shifting of the viewable map area from the first map area to the second map area according to the invention, thereby displaying points of interest that were not visible in the first map area but which are visible in the second map area;
FIG. 12 depicts the automatic lateral repositioning of the graphical current location indicator to accommodate points of interests, landmarks, navigational decision points, or other map detail;
FIG. 13 is a flowchart depicting main steps of a computer-implemented method of repositioning the graphical current location indicator; and
FIG. 14 depicts a mobile device presenting a hybrid map view in accordance with another implementation.

It will be noted that throughout the appended drawings, like features are identified by like reference numerals.

### DETAILED DESCRIPTION

One aspect of the present technology is a computer-implemented method comprising the steps defined in claim 1.

Another aspect of the present technology is a computer-readable medium comprising instructions in code which when loaded into a memory and executed by a processor of a computing device cause the computing device to perform the method defined in claim 1.

Another aspect of the present technology is a mobile device comprising the features defined in claim 6.

The details and particulars of these aspects of the technology will now be described below, by way of example, with reference to the drawings.

By way of overview, the present technology enables the relative position of a graphical current location indicator on a map to be changed. The graphical current location indicator may represent the current location of the user's own mobile device such as in a navigation application. Alternatively, the graphical current location indicator may represent the current location of another mobile device that is being tracked by a computing device. (The computing device may be another mobile device but it may also be a fixed device such as a desktop computer.) Repositioning is performed automatically based on the direction of travel and the velocity of the mobile device.

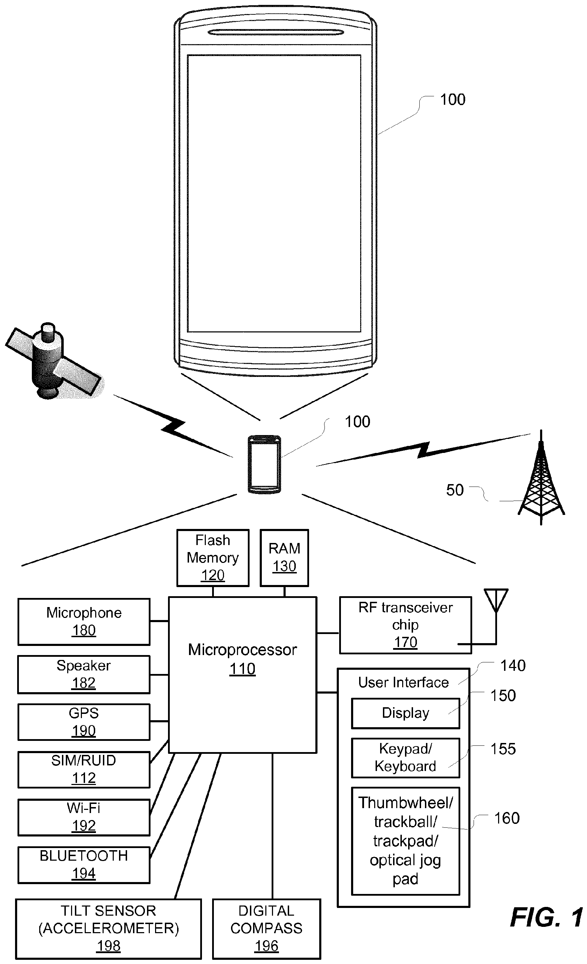

FIG. 1 is a depiction of a mobile device as one example of a computing device on which the present technology may be implemented. This mobile device, which is generally designated by reference numeral 100, includes a processor 110 and memory 120, 130 for executing one or more applications. The memory may include flash memory 120 and/or random access memory (RAM) 130. Other types or forms of memory may be used.

As depicted by way of example in FIG. 1, the mobile device 100 includes a user interface 140 for interacting with the mobile device and its applications. The user interface 140 may include one or more input/output devices, such as a display screen 150 (e.g. an LCD or LED screen or touch-sensitive display screen), and a keyboard or keypad 155. The user interface may also include an optical jog pad 160 and/or a thumbwheel, trackball, track pad or equivalent.

As depicted by way of example in FIG. 1, the mobile device 100 includes a transceiver 170 for communicating with other devices. The transceiver 170 may be a radiofrequency (RF) transceiver for wirelessly communicating with one or more base stations over a cellular wireless network using cellular communication protocols and standards for both voice calls and packet data transfer such as GSM, CDMA, GPRS, EDGE, UMTS, LTE, etc.

Where the mobile device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels.

Alternatively, where the computing device is a wired device like a desktop computer, laptop, etc., the transceiver 170 of the computing device 100 may be a modem or equivalent (for wired communications) using, for example, the TCP/IP protocol for Internet data communication. The mobile device 100 may also include one or more ports for wired connections, e.g. USB, HDMI, FireWire (IEEE 1394), etc.

The mobile device 100 includes a speech-recognition subsystem that has a microphone 180 for transforming voice input in the form of sound waves into an electrical signal. The electrical signal is then processed by a speech-recognition module (digital signal processor) to determine keywords or phrases from the voice input.

Optionally, the mobile device 100 may include a speaker 182 and/or an earphone jack.

For implementing the present technology, the mobile device 100 includes a position-determining subsystem such as a global navigation satellite system (GNSS) receiver, for example a Global Positioning System (GPS) receiver 190 (e.g. in the form of a chip or chipset) for receiving GNSS (e.g. GPS) radio signals transmitted from one or more orbiting GNSS (e.g. GPS) satellites.

References herein to "GPS" are meant to include Assisted GPS and Aided GPS. Although the present disclosure refers expressly to the "Global Positioning System", it should be understood that this term and its abbreviation "GPS" are being used expansively to include any GNSS or satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system.

Optionally, the mobile device 100 may include a Wi-Fi™ transceiver 192, a Bluetooth® transceiver 194, and/or a near-field communications (NFC) chip. The computing device 100 may also optionally include a transceiver for WiMax™ (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 and/or a tilt sensor or accelerometer 198.

As noted above, the present technology may used by a mobile device (wireless communications device, smart phone, cell phone, tablet, laptop, palmtop, portable navigation device, etc.) to track its own position, for example in a navigation application or a mapping application. The technology may also be used for any other mobile device or fixed computing device (e.g. desktop personal computer) to track another mobile device.

To implement this novel technology on a mobile device for use with a navigation application, the memory 120, 130 of the mobile device 100 depicted by way of example in FIG. 1 uses the position-determining subsystem, e.g. GPS receiver 190, to determine a current location of the mobile device. The processor 110 coupled to the memory 120, 130 causes the display 150 to display in a map viewport a first map area surrounding the current location of the mobile device and to display on the first map area a graphical current location indicator representing the current location of the mobile device. The map data for the first map area may be downloaded wirelessly from a map server having a map database. The map data may be vector map data or bitmap data. The map data subdivided into a grid of map tiles for each one of a plurality of zoom levels. The mobile device may request map data by sending a map data request to the map server specifying an area of interest or bounding box. This request may include current location coordinates and the size of the bounding box. In response to the request, the map server determines which map tile or map tiles are required. The request may also specify which map layers are required or not required. The map server sends the map tiles (and appropriate layers thereof) to the device for rendering onscreen. The map rendered onscreen thus constitutes the first map area. The graphical current location indicator is also displayed on the first map area. This graphical current location indicator may be displayed in a default position, which may be, for example, in the center of the map area. The default position may be configured to be any other position with the map area adjusted accordingly. In one embodiment, the relative position of the graphical current location indicator is determined first before defining the bounding box and sending the request to the map server. Thus, the device can determine what map data is required based on the placement of the graphical current location indicator relative to the viewport.

The processor 110 is further configured to cooperate with the display 150 to reposition the graphical current location indicator relative to the map viewport by shifting, displacing or moving the first map area to a partially overlapping second map area that includes both a new map area and a portion of the first map area that contains the graphical current location indicator. In this manner, the graphical current location indicator remains visible in the portion of the map displayed within the viewport. The map viewport (or simply "viewport") for the purposes of this specification means the portion of the display screen that is displaying the actual map.

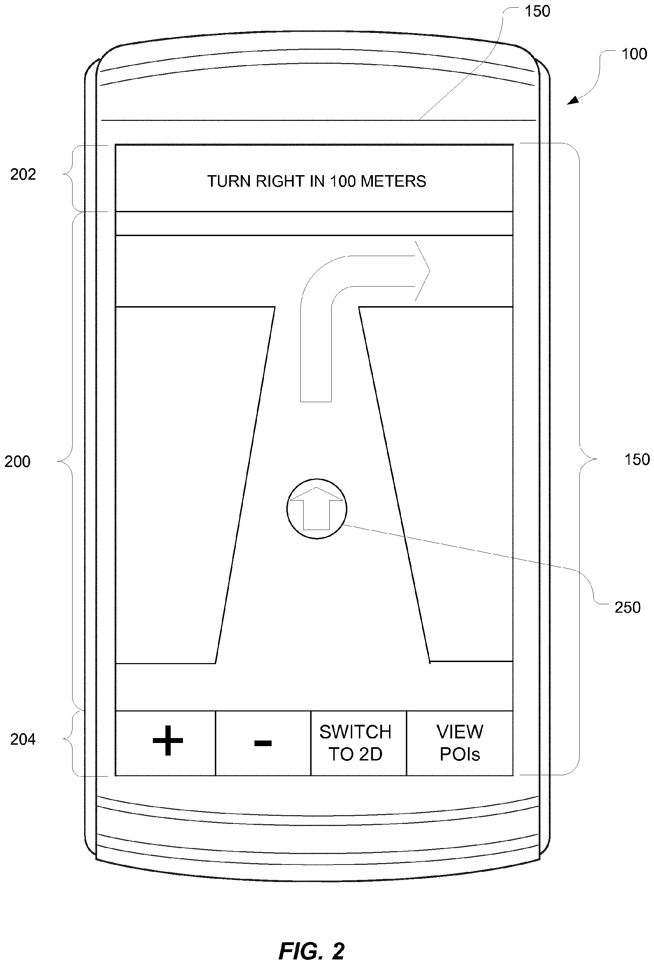

FIG. 2 depicts a map viewport 200 on a display 150 of a mobile device 100. The map viewport may occupy less than the total available onscreen display space as shown by way of example in FIG. 2. An upper banner 202 and/or various lower user interface elements 204 may be displayed onscreen in conjunction with the map viewport 200. The user interface elements that are shown, for example, below the map viewport 200 may enable zooming in and zooming out, toggling between different types of views (2D versus 3D), viewing/filtering POIs, etc. Above the map viewport 200 may be a navigation banner 202 for displaying navigational instructions, e.g. "Turn right in 100 meters" (or "Turn right in 300 feet" for US units). The navigational instructions may also be audibly spoken though a speaker by a text-to-speech module. In FIG. 2, the map is shown by way of example as a 3D map view (or perspective map view) although the map view could be replaced by a 2D map view.

The map viewport 200 thus defines a first map area 205 on which the graphical current location indicator 250 is presented. The graphical current location indicator 250 may be placed at a default position relative to the viewport, e.g. in the center of the viewport, although any other default position may be utilized or user-configured. The graphical current location indicator 250 may be any icon, graphical representation, avatar, arrow, symbol, word, or combination thereof. The graphical current location indicator may be user-configurable, customizable or modifiable.

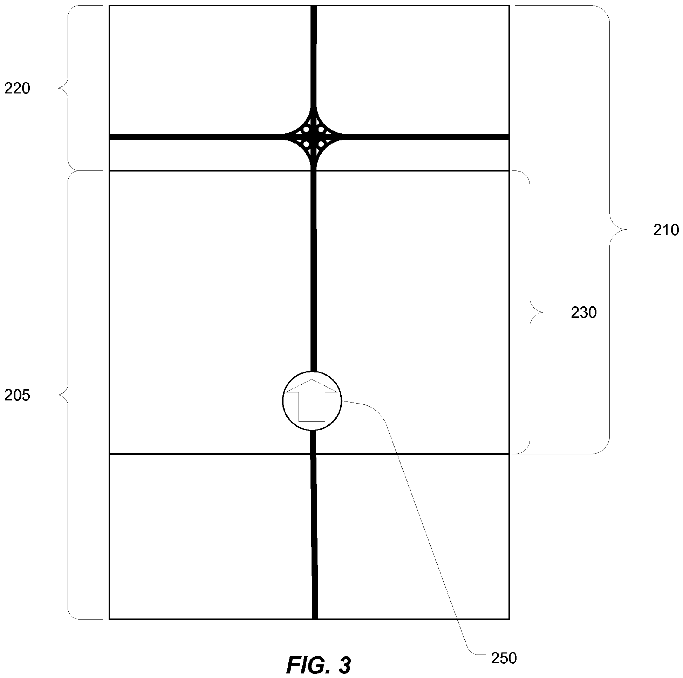

With reference now to FIG. 3, the first map area 205 is shifted automatically to a partially overlapping second map area 210. In shifting from the first map area 205 to the second map area 210, the graphical current location indicator 250 is repositioned relative to the viewport. For example, the graphical current location indicator may be displayed in a center of the viewport in the first map area (as a default setting). Shifting the viewable map area in the viewport (from the first to the second map area) thus has the effect of repositioning the graphical current location indicator relative to the viewport. This may be done to provide more map area in the forward direction of travel. FIG. 3 shows the shift from the first map area 205 to the second map area 210. Overlapping area 230 is retained and new map area 220 is added to constitute the second map area. The shift also has the effect of eliminating a portion of the first map area. In other words, the partially overlapping second map area 210 includes both the new map area 220 and a portion 230 of the first map area (i.e. the overlapping portion) that contains the graphical current location indicator 250. As can be seen from the simple example of FIG. 3, the shift brings into view the upcoming cloverleaf highway interchange. This additional map detail provides useful navigational information to the user.

Repositioning the graphical current location indicator (and the concomitant shifting of the map area) is done automatically (without user input or user intervention).

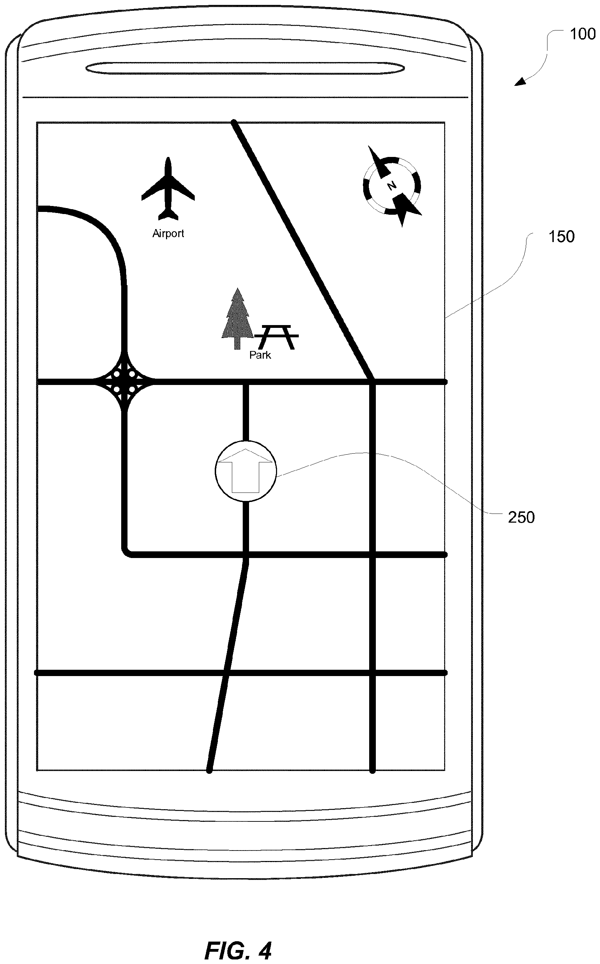

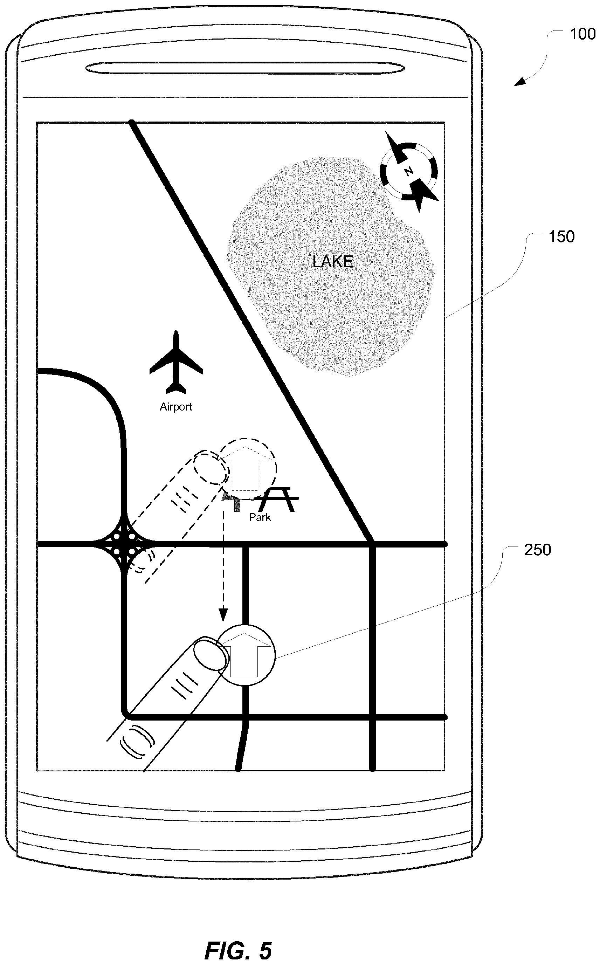

FIG. 4 and FIG. 5 depict an example not according to the invention of manually repositioning the graphical current location indicator relative to the map viewport (which in this particular example occupies the entire display area of the mobile device). In this particular example, the mobile device 100 includes a touch-sensitive display 150. As shown by way of example in FIG. 4 and FIG. 5, the user repositions the graphical current location indicator 250 by touching and dragging the graphical current location indicator (to move the indicator as shown from FIG. 4 to FIG. 5). It will be appreciated that any other suitable input command or gesture may be used to displace the graphical current location indicator. Manual repositioning enables the user to change the relative position of the graphical current location indicator (and its surrounding map area) and the viewport. In one example, the indicator is locked and must be unlocked before it can be moved. To unlock the indicator, the user may touch or tap the indicator, perform a predetermined gesture, or provide any other recognizable user input. The indicator may change color, shade, size or appearance in order to signify that the indicator has been unlocked and is thus movable onscreen. The indicator may automatically re-lock after a period of time, after movement or in response to further user input signifying a locking command. In one example, the user may shift the map and indicator in any direction. In another example, the user may not only shift the map and indicator but may also rotate the map and indicator to any desired orientation. A default orientation may be track-up (with the direction of travel pointing vertically upward on the display) or north-up (with north pointing vertically upward on the display). However, a user may wish the reorient the map to any other orientation.

According to the invention, the mobile device is configured to automatically reposition the graphical current location indicator and associated map area (i.e. without user input or user intervention). The mobile device determines a direction of travel using a GPS receiver, in order to shift the map to optimize forward map area. The mobile device may also additionally automatically laterally shift the indicator and map to increase or maximize the display of nearby navigational decisions points, points of interest, landmarks, search result locations, etc.

Accordingly, the processor is configured to reposition the graphical current location indicator by automatically shifting from the first map area to the second map area based on a predicted direction of travel and a velocity of the mobile device. According to the invention, the processor shifts the graphical current location indicator by an amount proportional to the velocity of the mobile device. The velocity and heading (direction of travel) are determined using the GPS receiver. Accordingly, the faster the device is travelling the more the indicator and map are shifted. It will be appreciated that the map scale (zoom level) may also be changed as the velocity increases. The scale change may thus be used in conjunction with the shifting of the indicator and map. In one particular embodiment, the indicator and map may be shifted until the indicator reaches the edge of the viewport beyond which the zoom level changes if the velocity continues to increase. At the lower zoom level, the indicator is more centrally displayed and can thus progressively shift rearwardly (with respect to the direction of travel) as the device continues to accelerate. Again, the device will permit the indicator to shift until it reaches the edge of the viewport at which point the scale again changes to an even lower zoom level.

As mentioned above, in an embodiment, the processor is configured to additionally automatically laterally shift from the first map area to the second map area to display a Point of Interest in the second map area that was not visible in the first map area. The shifting to accommodate a Point of Interest or the location of a search result may be done at a fixed zoom level. In other embodiments, the zoom level may be adjusted to accommodate the POI.

The underlying purpose of the repositioning is to increase the amount of map area ahead of the device and/or in an area where there is useful information for the user (like POIs). The area rearward of the device is generally not of much use to the user who is typically much more interested in what lies ahead than what has just been passed. The rearward map area is thus mainly of interest for the general context it provides to the user. In other words, this information reminds the user where the user has just been, which may be useful in some cases. For example, the user may consult the map and see that he or she has just passed a given town or city and is heading into a rural area devoid of landmarks or POIs. The rearward map area is thus of some utility since it situates the user. The rearward map area may be presented at the same zoom level or it may be presented at a lower zoom level.

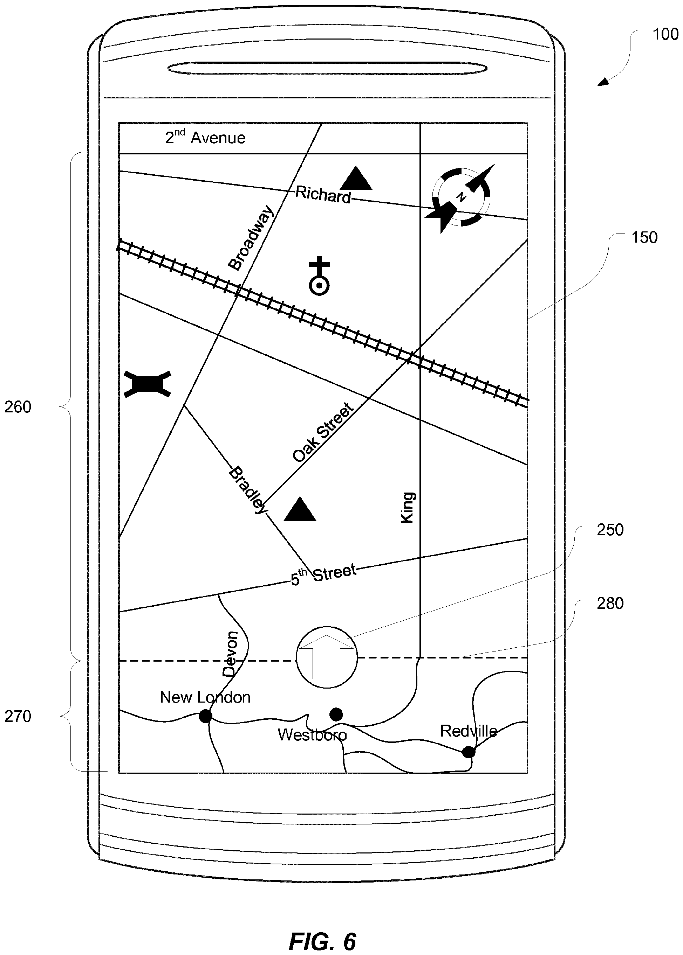

Accordingly, in one embodiment, which is illustrated by way of example in FIG. 6, a forward map area 260 that is forward of the graphical current location indicator 250 is displayed at a first zoom level and a rearward map area 270 that is rearward of the graphical current location indicator is displayed at a second zoom level.

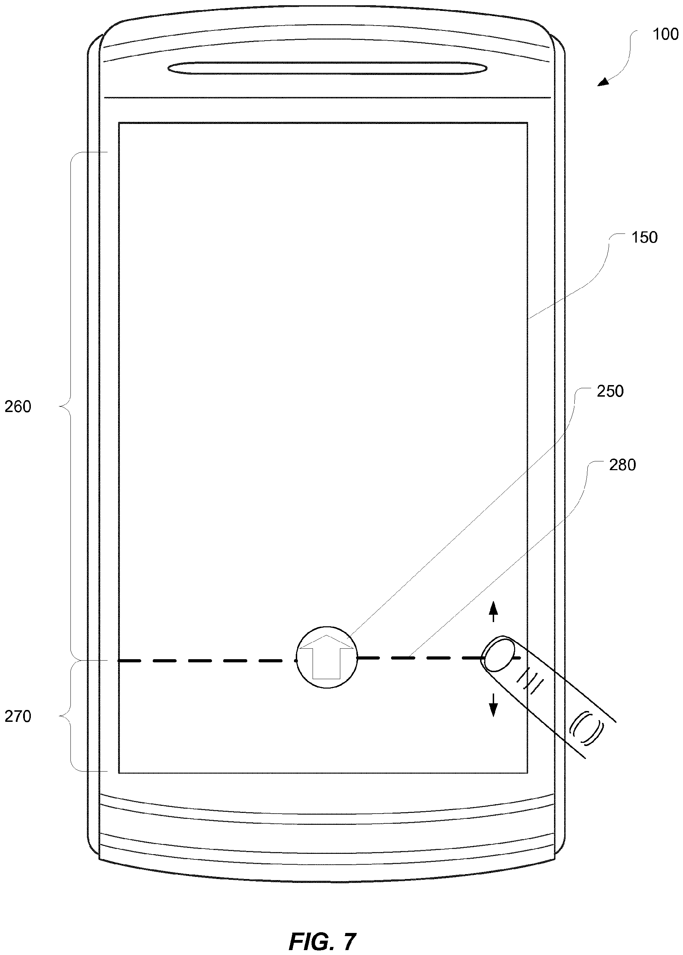

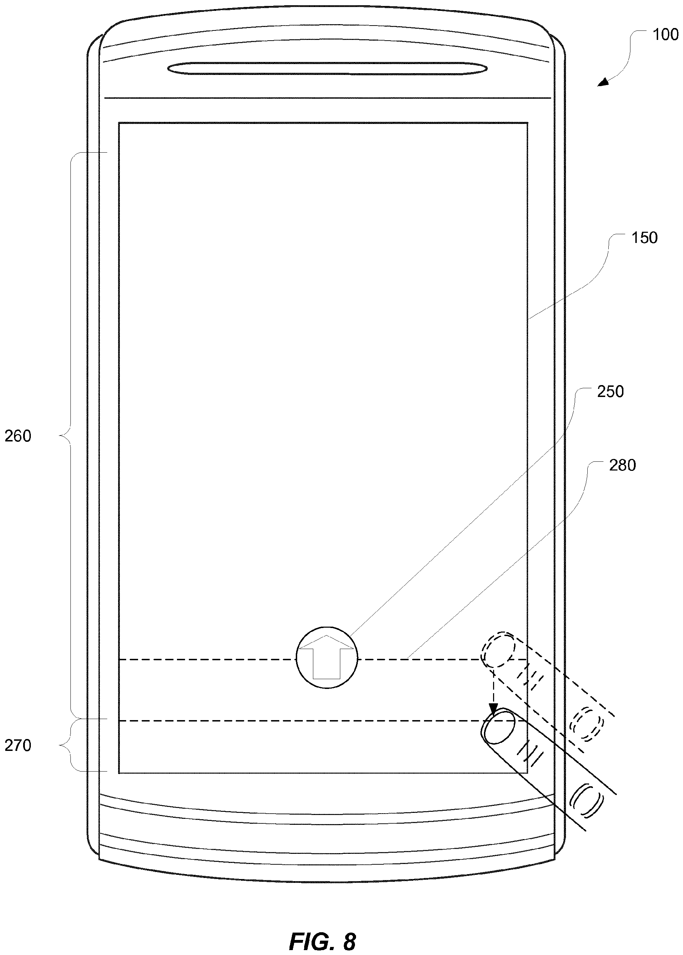

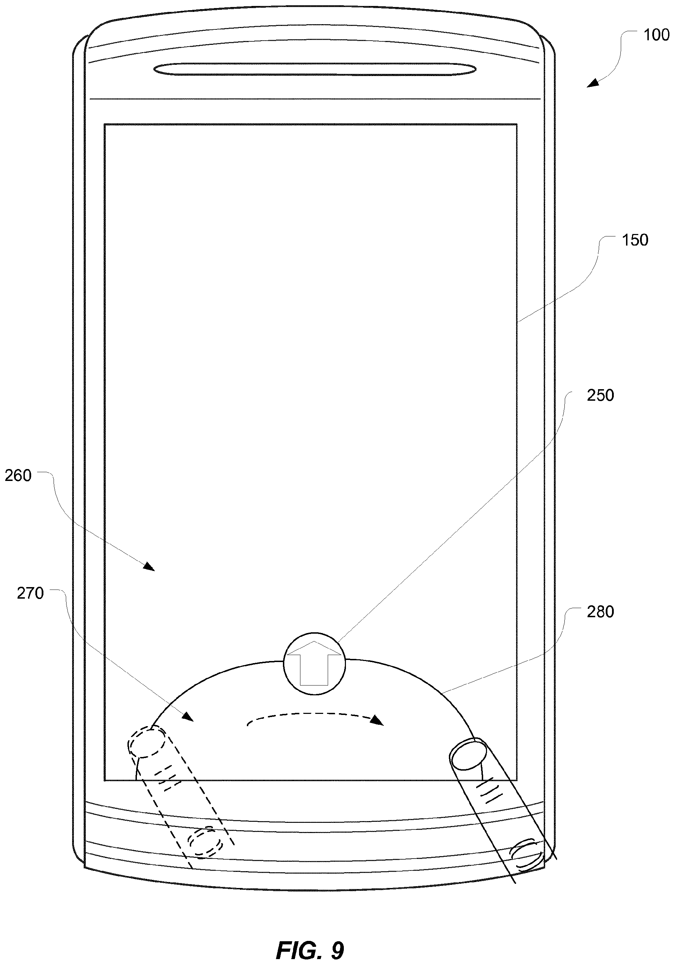

FIG. 7 depicts an example not according to the invention of how the boundary 280 between the forward map area and the rearward map area may be manually adjusted to vary the relative sizes of the forward map area 260 and the rearward map area 270. FIG. 7 shows how the boundary 280 may be relocated in response to simple touch- and-drag input. FIG. 8 depicts the relocated boundary 280. Note that the boundary 280 no longer passes through (or aligns with) the graphical current location indicator 250. FIG. 9 depicts a further example of how the user can draw any arbitrary boundary between the forward and rearward map areas. The user may also set the relative zoom levels (scales) or specify that there is to be no scale differential (i.e. no boundary).

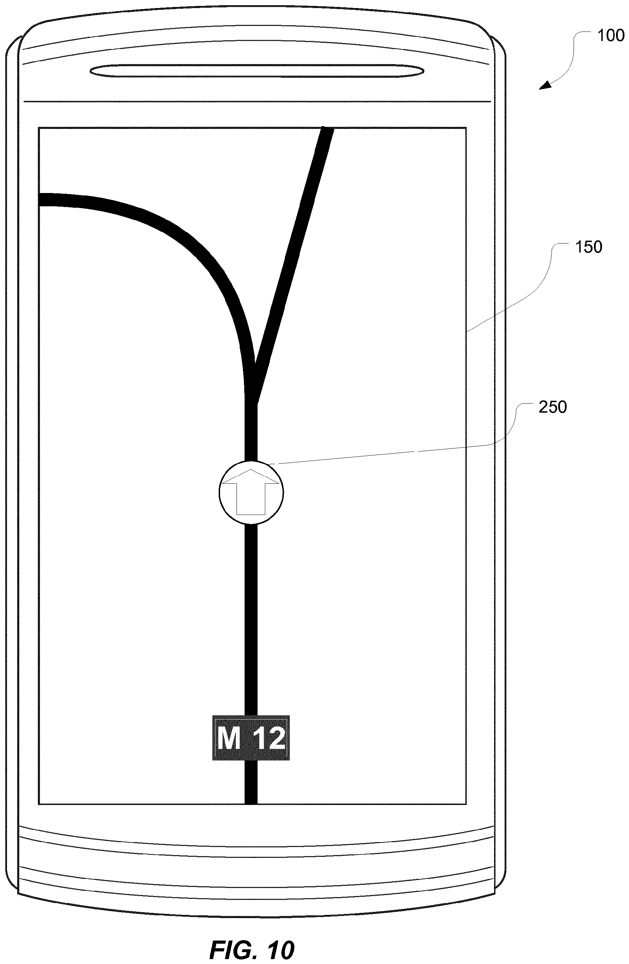

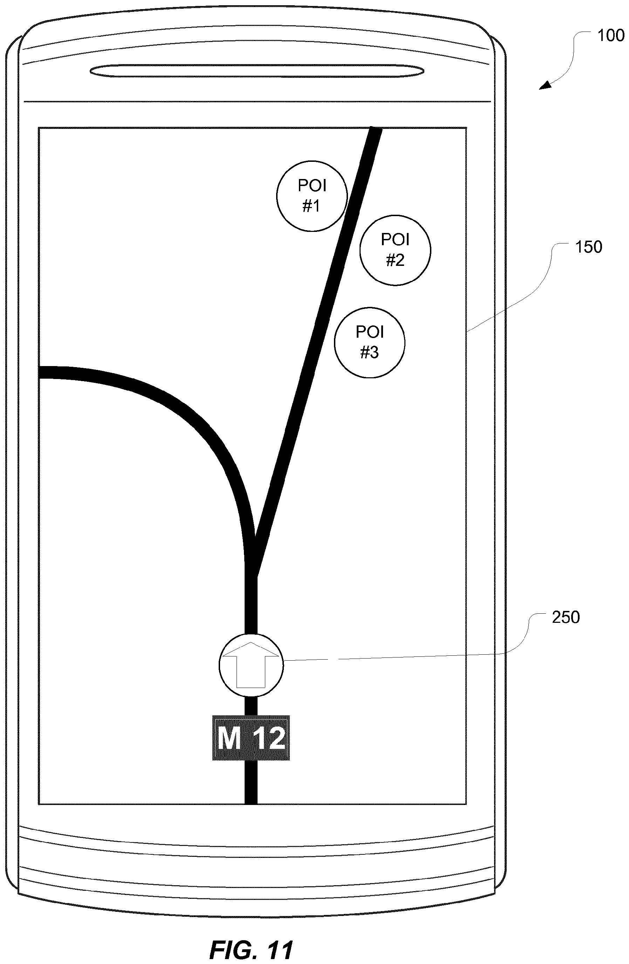

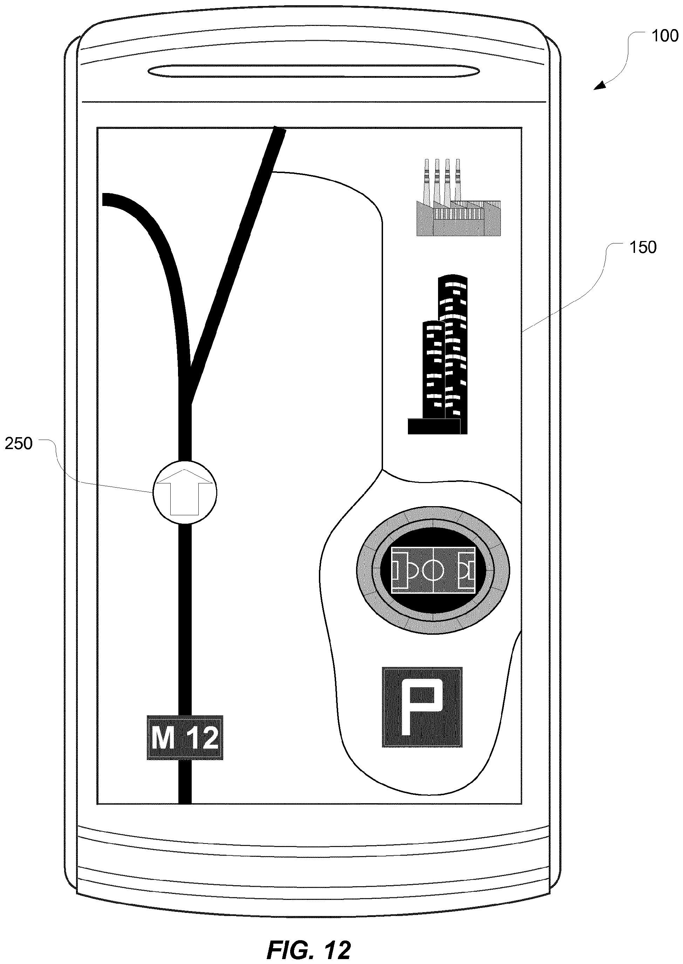

FIG. 10, FIG. 11 and FIG. 12 depict embodiments according to the invention of how the mobile device can be configured to automatically shift the viewable map area from a first map area to a second map area in order to accommodate points of interest (FIG. 11) or other map detail or navigational decision points (FIG. 12) while still retaining the graphical current location indicator 250 in the viewport. FIG. 10 shows a mobile device displaying a map rendered by a processor executing a navigation application. The graphical current location indicator 250 shows that the mobile device is traveling on highway M12. Although there are nearby points of interest, these POIs are not visible on the first map area at the given scale. FIG. 11 shows how the indicator 250 and its associated map area are shifted downwardly to accommodate the three points of interest (POI#1, POI#2, POI#3) which would otherwise not be visible. The same scale is retained so the user does not lose map detail. The same concept may be applied to the locations of search results, navigational decision points, or other map detail that would otherwise not be visible except for the shift in the map. Repositioning/shifting laterally is depicted by way of example in FIG. 12. In this example, map detail is obtained for an urban area to the right of highway M12 by shifting the map and indicator to the left.

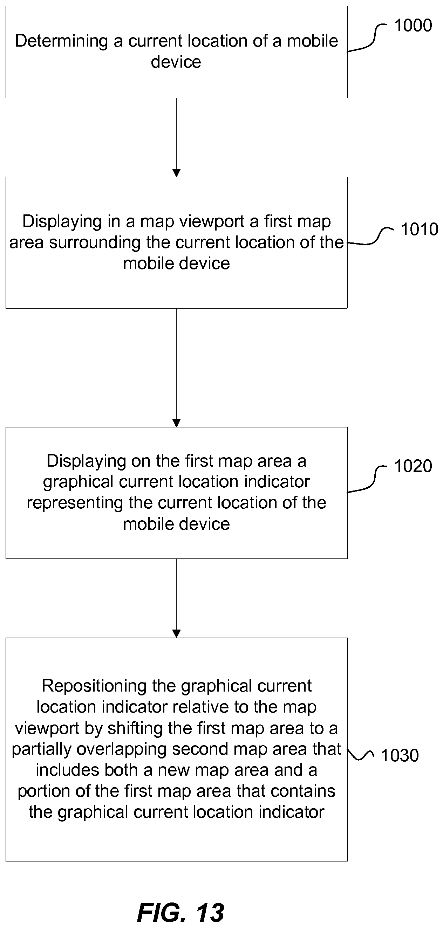

Another inventive aspect of the disclosure is a computer-implemented method performed by a computing device (e.g. a mobile device) for repositioning a graphical current location indicator relative to the map viewport. As depicted in the flowchart of FIG. 13, the computer-implemented method comprises a step, act or operation 1000 of determining a current location of a mobile device, a step, act or operation 1010 of displaying in a map viewport a first map area surrounding the current location of the mobile device; a step, act or operation 1020 of displaying on the first map area a graphical current location indicator representing the current location of the mobile device and a step, act or operation 1030 of repositioning the graphical current location indicator relative to the map viewport by shifting the first map area to a partially overlapping second map area that includes both a new map area and a portion of the first map area that contains the graphical current location indicator. The order of the steps, acts or operations may vary from what is shown in the flowchart. For example, the step, act or operation 1000 of determining the current location of the mobile device may occur before the displaying 1010 of the first map area or it may occur after the displaying 1010 of the first map area. The determining of the current location 1000 may also occur substantially simultaneously with the displaying 1010 of the first map area. The determination of the current location 1000, it is to be understood, is a recurring step in that the device repeatedly determines its current location for plotting on the map. Likewise, the device updates the graphical current location indicator on the map in response to location updates from its GPS receiver.

Graphically, the shifting effect may be visually presented as a smooth or gradual movement from one area to the other or, alternatively, the map may step or jump from the first to the second map area.

According to the invention, repositioning the graphical current location indicator comprises automatically shifting from the first map area to the second map area based on a predicted direction of travel and a velocity of the mobile device. If the device is travelling quickly in a generally consistent direction, the user navigation experience is enhanced by providing more forward map area detail at the expense of rearward map detail. The faster the device travels in a generally consistent direction of travel the less likely the user of the device will require rearward map detail. When repositioning the graphical current location indicator, the mobile device takes into account programmed route. According to the invention, the device is configured to compute a confidence level relating to a direction of travel and then to use that confidence level to vary the repositioning of the indicator. The more confident the device is, the more aggressively it can shift the indicator. If the device has zero confidence, the indicator is moved toward the central default position. If the device has maximum confidence, the indicator may be moved to the bottom edge of the viewport (assuming a track-up navigation view).

According to the invention, repositioning the graphical current location indicator is proportional to the velocity of the mobile device. The faster the device travels the greater the indicator is displaced. As the device slows down, the indicator may be repositioned back to a more centralized relative position in the viewport. As the device accelerates to larger speeds, the indicator may be moved more aggressively to an edge of the viewport to maximize the amount of forward map detail in the viewport.

In one implementation of this method, repositioning comprises additionally automatically laterally shifting from the first map area to the second map area to display a Point of Interest in the second map area that was not visible in the first map area. In this implementation, the device may shift the map area to maximize the view of POI's. The POI's may be location-specific search results obtained using an over-the-air search engine query or these may be default (filtered or unfiltered) POI's pre-loaded in a navigation application database (e.g. gas stations, hotels, restaurants, landmarks, parks, etc.) Shifting the map area enables the device to optimally present as many POI's as possible. The POI's may also, in another embodiment, be ranked or scored so that a maximization algorithm can weight the POI's and determine the maximum or optimal display of POI's based on their significance or ranking. In this foregoing discussion, the zoom level (or scale) remains fixed. However, as a further variant, the zoom level or scale may be adjusted.

In one implementation, a forward map area that is forward of the graphical current location indicator is displayed at a first zoom level and a rearward map area that is rearward of the graphical current location indicator is displayed at a second zoom level. In this implementation, as shown by way of example in FIG. 11, the map area within the viewport is divided into forward and rearward map areas. The forward map area is displayed at a first zoom level which may be a higher zoom level than the rearward map area. This provides maximum detail for the forward map area but still provides high-level map information for the rearward map area.

The technology described above may be useful not only for navigation applications but also for tracking applications (applications that track one or more moving objects on a map). An example use case illustrates the applicability to a tracking application. Consider, for example, a delivery dispatcher with a tracking application that tracks and displays the locations of delivery vehicles. At a given zoom level or for a given area of interest, the map may display several vehicles whose locations are being tracked. The dispatcher can zoom in on the map and select one particular vehicle on a viewport by touching or clicking on the vehicle's icon. This signifies that the dispatcher wishes to track the selected vehicle by locking its position relative to the viewport. In response the map will move to display the selected vehicle's location while keeping the vehicle "pinned" or "locked" to the same relative position on the viewport. Other vehicle icons may also be displayed on the map in the viewport, or their relative position to the selected vehicle's location may be denoted by off-map indicators/ arrows so that if their actual position is not displayed on a map an indicator shows the direction in which they are located. The icon representing the selected vehicle may also be unlocked relative to the viewport. For example, by touching and dragging the map, as opposed to the vehicle icon, the vehicle icon is unlocked relative to the viewport. The viewer may then select and track a different vehicle by repeating the above method.

In the foregoing embodiments, the map is shifted to reposition a single graphical location indicator (e.g. a current location indicator) relative to the viewport. In another example, not according to the invention, the repositioning may be based on two (or more) locations or points. For example, the map may contain two location indicators. One location indicator may represent a current location and the other may represent, for example, a destination on a map (e.g. a destination displayed by a navigation application). This destination (fixed point) can be pinned/fixed relative to the viewport. With both the current location of the vehicle and destination pinned relative to the viewport, the map orientation and zoom will be recalculated to draw (render) the map at the appropriate size and orientation so the vehicle and destination fit in the viewport, while keeping each locked to its relative position in the viewport. Alternatively, the second location/point can be another mobile device. Similar map calculations would apply to re-size (re-zoom) and re-orient the map to maintain the positions relative to the viewport. For the specific case of more than two points (or objects) to be fixed relative to the viewport, this can be achieved by constraining these points (objects). This would lead to a non-linear transform which can be resolved by taking the bounding polygon and scaling it to fit the viewport and positioning the pinned objects (points) to minimize their total distances to their respective desired locations.

In another implementation, the repositioning of the map acts as a trigger to cause the device to display the second map area (or new map area) in the forward direction in a 3D (perspective) view, with the first map area showing the current location in a standard planar 2D view. This may be useful in a scenario in which the user is arriving at a destination but has never been there before and does not recognize the buildings or surroundings. If the device switches to this hybrid 2D/3D view, the user would get a traditional 2D view of where they are located but also a perspective 3D view from street level of the buildings or surroundings in the road ahead. This hybrid view could be user initiated by the user in response to user input when the user realizes the user is getting close to the destination. Alternatively, the device could automatically initiate this hybrid view based on the device detecting that the device is within a predetermined distance of the destination or based on a number of blocks or intersections from the destination. The device may be configured to trigger the hybrid view based not only on at the predetermined distance but also on the speed of the device to ensure that the device has time to obtain and render the map data for the hybrid view.

The 3D view may include digital photographs, photorealistic renderings, wireframe models, or any combination thereof. The type of map data used to render the 3D map may be user-specified or automatically determined by the device or by a map server. A transitional zone between the 2D view and the 3D view may be displayed rather than providing a discontinuity between the 2D map area and the 3D view of the upcoming surroundings. There would be several options for the transitional zone, such as a middle ground of wireframes or boxes that add detail, but less detail than the photorealistic or detailed 3D view of the destination and its surroundings.

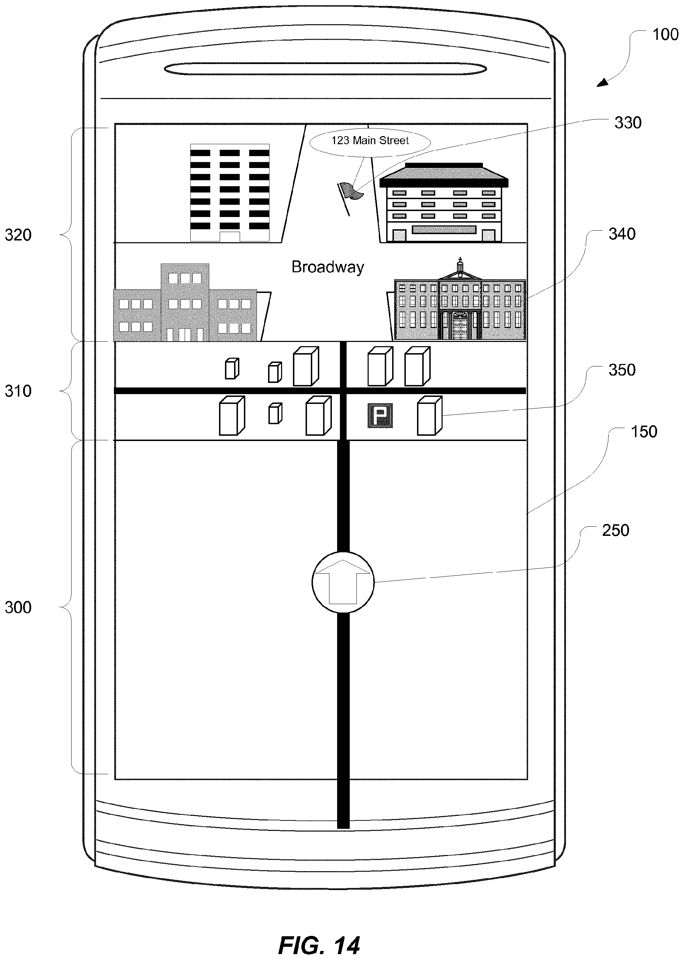

FIG. 14 depicts a mobile device 100 presenting on its display 150 an example of a hybrid map view in accordance with this further implementation of the technology. The hybrid map view includes a two-dimensional (2D) planar view 300 of the current map area that contains the graphical current location indicator 250. The hybrid map view also includes a three-dimensional (3D) perspective view 320 of the destination area and an optional transitional zone 310 in between the 2D view 300 of the current area and the 3D view 320 of the destination area. The 3D view 320 of the destination area may include photos or photorealistic renderings of the surrounding of the destination (indicated by destination flag 330). This may include photos or renderings of buildings 340 or any other landmarks or geographical features that characterize the surroundings of the destination. The transitional zone 310 may include wireframe or simplistic box-like renditions of buildings. As shown in this illustrated example, the transitional area 310 provides less detail than the destination area (3D area).

The relative proportions of onscreen space occupied by the views 300, 310 and 320 may be user-adjusted in response to user input received while displaying the hybrid view or these may be user-configured in a settings and options page. In another embodiment, the relative proportions may automatically change as the device approaches or arrives at the destination. In another embodiment, the transitional zone may be omitted entirely or may be selectively suppressed in response to user input.

In another embodiment, the device may be toggled between hybrid and purely planar views in response to user input such as manual input (touching or clicking) or voice commands. The device may toggle any one or more of the views 300, 310, 320 between planar (2D), wireframe and perspective (3D) views. For example, the device may toggle the view of the destination area between a 2D view and a 3D view.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed, permanent, non-volatile or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) as defined in the appended claims. The scope of the exclusive right sought by the Applicant(s) is therefore intended to be limited solely by the appended claims.

## Claims

1. A computer-implemented method comprising:
receiving a destination, a programmed route being associated with the destination;
determining (1000) a current location of a mobile device;
displaying (1010) in a map viewport (200) a first map area (205) surrounding the current location of the mobile device;
displaying (1020) on the first map area (205) a graphical current location indicator (250) representing the current location of the mobile device; and
repositioning (1030) the graphical current location indicator (250) relative to the map viewport (200) by shifting the first map area (205) to a partially overlapping second map area (210) that includes both a new map area (220) and a portion (230) of the first map area (205) that contains the graphical current location indicator (250);
wherein the repositioned graphical current location indicator is displayed at a boundary (280) of a forward map area (260) that is forward of the graphical current location indicator (250) and a rearward map area (270) that is rearward of the graphical current location indicator (250), to thus provide more map area in a forward direction of travel;
wherein the map areas (205, 210, 260, 270) and the graphical current location indicator (250) are displayed track-up such that the direction of travel points vertically upward on a display;
wherein repositioning the graphical current location indicator (250) comprises determining a velocity and direction of travel of the mobile device and automatically shifting from the first map area (205) to the second map area (210) based on the direction of travel and the velocity; and
wherein an amount by which the graphical current location indicator (250) is repositioned is proportional to the velocity of the mobile device;
**characterized in that**:
repositioning the graphical position indicator (250) comprises determining the velocity and the direction of travel of the mobile device using a GPS receiver;
wherein repositioning the graphical current location indicator takes into account the programmed route and comprises (i) computing a confidence level relating to the direction of travel and (ii) using the confidence level to vary the repositioning of the indicator, whereby if the device has zero confidence, the indicator is moved toward a central default position and if the device has maximum confidence, the indicator is moved to a bottom edge of the viewport.

2. The method as claimed in any preceding claim wherein repositioning comprises additionally automatically laterally shifting from the first map area (205) to a further map area to display a Point of Interest in the further map area that was not visible in the first map area (205).

3. The method as claimed in any preceding claim wherein a forward map area (260) that is forward of the boundary (280) is displayed at a first zoom level and a rearward map area (270) that is rearward of the boundary (280) is displayed at a second zoom level.

4. The method as claimed in any preceding claim, further comprising: (i) detecting that the device is within a predetermined distance of the destination and, in response thereto, (ii) causing the device to display the second map area or new map area in the forward direction in a 3D (perspective) view, with the first map area showing the current location in a standard planar 2D view.

5. A computer-readable medium comprising instructions in code which loaded into a memory and executed by a processor of a computing device cause the computing device to perform the method of any preceding claim.

6. A mobile device (100) comprising:
a position-determining subsystem for determining a current location of the mobile device; and
a processor (110) coupled to a memory (120, 130), the processor being configured to receive a destination, a programmed route being associated with the destination;
wherein the processor is configured for causing a display (150) to display in a map viewport (200) a first map area (205) surrounding the current location of the mobile device and to display on the first map area (205) a graphical current location indicator representing the current location of the mobile device, the map and the graphical current location indicator (250) being displayed track-up such that the direction of travel points vertically upward on a display;
wherein the processor is configured to cooperate with the display to reposition the graphical current location indicator (250) relative to the map viewport (200) by shifting the first map area (205) to a partially overlapping second map area (210) that includes both a new map area (220) and a portion (230) of the first map area (205) that contains the graphical current location indicator(250);
wherein the repositioned graphical current location indicator is displayed at a boundary (280) of a forward map area (260) that is forward of the graphical current location indicator (250) and a rearward map area (270) that is rearward of the graphical current location indicator (250), to thus provide more map area in a forward direction of travel;
wherein the map areas (205, 210, 260, 270) and the graphical current location indicator (250) are displayed track-up such that the direction of travel points vertically upward on a display;
wherein repositioning the graphical current location indicator (250) comprises determining a velocity and direction of travel of the mobile device and automatically shifting from the first map area (205) to the second map area (210) based on the direction of travel and the velocity; and
wherein an amount by which the graphical current location indicator (250) is repositioned is proportional to the velocity of the mobile device; **characterized in that**:
repositioning the graphical current location indicator (250) comprises determining the velocity and the direction of travel of the mobile device using a GPS receiver;
wherein repositioning the graphical current location indicator takes into account the programmed route and comprises (i) computing a confidence level relating to the direction of travel and (ii) using the confidence level to vary the repositioning of the indicator, whereby if the device has zero confidence, the indicator is moved toward a central default position and if the device has maximum confidence, the indicator is moved to a bottom edge of the viewport.

7. The mobile device as claimed in claim 6 wherein the processor is configured to additionally automatically laterally shift from the first map area (205) to a further map area to display a Point of Interest in the further map area that was not visible in the first map area (205).

8. The mobile device as claimed in any one of claims 6 to 7 wherein a forward map area (260) that is forward of the boundary (280) is displayed at a first zoom level and a rearward map area (270) that is rearward of the boundary (280) is displayed at a second zoom level.

## Patentansprüche

1. Rechnerimplementiertes Verfahren, umfassend:
Empfangen eines Ziels, wobei eine programmierte Route mit dem Ziel assoziiert ist;
Bestimmen (1000) eines aktuellen Standorts eines Mobilgeräts;
Anzeigen (1010), in einem Kartenansichtsfeld (200), eines ersten Kartenbereichs (205), der den aktuellen Standort des Mobilgeräts umgibt;
Anzeigen (1020), auf dem ersten Kartenbereich (205), eines grafischen Standortanzeigers (250), der den aktuellen Standort des Mobilgeräts darstellt; und
Neupositionieren (1030) des grafischen Standortanzeigers (250) relativ zu dem Kartenansichtsfeld (200) durch Verschieben des ersten Kartenbereichs (205) zu einem teilweise überlappenden zweiten Kartenbereich (210), der sowohl einen neuen Kartenbereich (220) als auch einen Abschnitt (230) des ersten Kartenbereichs (205) enthält, welcher den grafischen Standortanzeiger (250) enthält;
wobei der neupositionierte grafische Standortanzeiger an einer Grenze (280) eines vorderen Kartenbereichs (260), der vor dem grafischen Standortanzeiger (250) liegt, und eines hinteren Kartenbereichs (270) angezeigt wird, der hinter dem grafischen Standortanzeiger (250) liegt, um dadurch mehr Kartenfläche in einer Vorwärtsreiserichtung vorzusehen;
wobei die Kartenbereiche (205, 210, 260, 270) und der grafische Standortanzeiger (250) derart in Fahrtrichtung angezeigt werden, dass die Reiserichtung vertikal nach oben auf einer Anzeige deutet;
wobei das Neupositionieren des grafischen Standortanzeigers (250) Bestimmen einer Geschwindigkeit und Reiserichtung des Mobilgeräts und automatisches Verschieben aus dem ersten Kartenbereich (205) zum zweiten Kartenbereich (210) auf Grundlage der Reiserichtung und der Geschwindigkeit umfasst; und
wobei ein Betrag, um den der grafische Standortanzeiger (250) neupositioniert wird, proportional zur Geschwindigkeit des Mobilgeräts ist;
**dadurch gekennzeichnet, dass**:
das Neupositionieren des grafischen Standortanzeigers (250) Bestimmen der Geschwindigkeit und der Reiserichtung des Mobilgeräts unter Benutzung eines GPS-Empfängers umfasst;
wobei das Neupositionieren des grafischen Standortanzeigers die programmierte Route berücksichtigt und folgendes umfasst: (i) Errechnen eines Vertrauensgrads, der sich auf die Reiserichtung bezieht, und (ii) Verwenden des Vertrauensgrads zum Variieren des Neupositionierens des Anzeigers, wobei, wenn das Gerät kein Vertrauen hat, der Anzeiger zu einer zentralen Standardposition hin bewegt wird, und wenn das Gerät maximales Vertrauen hat, der Anzeiger zu einer Unterkante des Anzeigefelds bewegt wird.

2. Verfahren nach einem der vorhergehenden Ansprüche, wobei das Neupositionieren zusätzliches automatisches seitliches Verschieben aus dem ersten Kartenbereich (205) zu einem weiteren Kartenbereich umfasst, um einen Punkt von Interesse im weiteren Kartenbereich anzuzeigen, der im ersten Kartenbereich (205) nicht sichtbar war.

3. Verfahren nach einem der vorhergehenden Ansprüche, wobei ein vorderer Kartenbereich (260), der vor der Grenze (280) liegt, auf einer ersten Zoomstufe angezeigt wird, und ein hinterer Kartenbereich (270), der hinter der Grenze (280) liegt, auf einer zweiten Zoomstufe angezeigt wird.

4. Verfahren nach einem der vorhergehenden Ansprüche, ferner umfassend: (i) Erkennen, dass sich das Gerät innerhalb einer vorgegebenen Entfernung zum Ziel befindet, und, in Reaktion darauf, (ii) Bewirken, dass das Gerät den zweiten Kartenbereich oder einen neuen Kartenbereich in der Vorwärtsrichtung in einer (perspektivischen) 3D-Ansicht anzeigt, wobei der erste Kartenbereich den aktuellen Standort in einer standardmäßigen planen 2D-Ansicht zeigt.

5. Maschinenlesbares Medium, das Anweisungen in Code umfasst, welche, wenn sie in einen Speicher geladen und durch einen Prozessor eines Rechengeräts ausgeführt werden, bewirken, dass das Rechengerät das Verfahren nach einem der vorhergehenden Ansprüche ausführt.

6. Mobilgerät (100), umfassend:
ein Positionsbestimmungssubsystem zum Bestimmen eines aktuellen Standorts des Mobilgeräts; und
einen Prozessor (110), der an einen Speicher (120, 130) gekoppelt ist, wobei der Prozessor zum Empfangen eines Ziels konfiguriert ist, wobei eine programmierte Route mit dem Ziel assoziiert ist;
wobei der Prozessor zum Bewirken konfiguriert ist, dass eine Anzeige (150) in einem Kartenansichtsfeld (200) einen ersten Kartenbereich (205) anzeigt, der den aktuellen Standort des Mobilgeräts umgibt, und auf dem ersten Kartenbereich (205) einen grafischen Standortanzeiger anzeigt, der den aktuellen Standort des Mobilgeräts darstellt, wobei die Karte und der grafische Standortanzeiger (250) derart in Fahrtrichtung angezeigt werden, dass die Reiserichtung vertikal nach oben auf einer Anzeige deutet;
wobei der Prozessor zum Zusammenwirken mit der Anzeige zum Neupositionieren des grafischen Standortanzeigers (250) relativ zu dem Kartenansichtsfeld (200) durch Verschieben des ersten Kartenbereichs (205) zu einem teilweise überlappenden zweiten Kartenbereich (210), der sowohl einen neuen Kartenbereich (220) als auch einen Abschnitt (230) des ersten Kartenbereichs (205) enthält, welcher den grafischen Standortanzeiger (250) enthält, konfiguriert ist;
wobei der neupositionierte grafische Standortanzeiger an einer Grenze (280) eines vorderen Kartenbereichs (260), der vor dem grafischen Standortanzeiger (250) liegt, und eines hinteren Kartenbereichs (270) angezeigt wird, der hinter dem grafischen Standortanzeiger (250) liegt, um dadurch mehr Kartenfläche in einer Vorwärtsreiserichtung vorzusehen;
wobei die Kartenbereiche (205, 210, 260, 270) und der grafische Standortanzeiger (250) derart in Fahrtrichtung angezeigt werden, dass die Reiserichtung vertikal nach oben auf einer Anzeige deutet;
wobei das Neupositionieren des grafischen Standortanzeigers (250) Bestimmen einer Geschwindigkeit und Reiserichtung des Mobilgeräts und automatisches Verschieben aus dem ersten Kartenbereich (205) zum zweiten Kartenbereich (210) auf Grundlage der Reiserichtung und der Geschwindigkeit umfasst; und wobei ein Betrag, um den der grafische Standortanzeiger (250) neupositioniert wird, proportional zur Geschwindigkeit des Mobilgeräts ist;
**dadurch gekennzeichnet, dass**:
das Neupositionieren des grafischen Standortanzeigers (250) Bestimmen der Geschwindigkeit und der Reiserichtung des Mobilgeräts unter Benutzung eines GPS-Empfängers umfasst;
wobei das Neupositionieren des grafischen Standortanzeigers die programmierte Route berücksichtigt und folgendes umfasst: (i) Errechnen eines Vertrauensgrads, der sich auf die Reiserichtung bezieht, und (ii) Verwenden des Vertrauensgrads zum Variieren des Neupositionierens des Anzeigers, wobei, wenn das Gerät kein Vertrauen hat, der Anzeiger zu einer zentralen Standardposition hin bewegt wird, und wenn das Gerät maximales Vertrauen hat, der Anzeiger zu einer Unterkante des Anzeigefelds bewegt wird.

7. Mobilgerät nach Anspruch 6, wobei der Prozessor zum zusätzlichen automatischen seitlichen Verschieben aus dem ersten Kartenbereich (205) zu einem weiteren Kartenbereich konfiguriert ist, um einen Anziehungspunkt im weiteren Kartenbereich anzuzeigen, der im ersten Kartenbereich (205) nicht sichtbar war.

8. Mobilgerät nach einem der Ansprüche 6 bis 7, wobei ein vorderer Kartenbereich (260), der vor der Grenze (280) liegt, auf einer ersten Zoomstufe angezeigt wird, und ein hinterer Kartenbereich (270), der hinter der Grenze (280) liegt, auf einer zweiten Zoomstufe angezeigt wird.

## Revendications

1. Procédé implémenté par ordinateur comprenant de :
recevoir une destination, une route programmée étant associée à la destination ;
déterminer (1000) une localisation actuelle d'un dispositif mobile ;
afficher (1010) dans une fenêtre de visualisation de carte (200) une première zone de carte (205) entourant la localisation actuelle du dispositif mobile ;
afficher (1020) sur la première zone de carte (205) un indicateur de localisation actuelle graphique (250) représentant la localisation actuelle du dispositif mobile ; et
repositionner (1030) l'indicateur de localisation actuelle graphique (250) par rapport à la fenêtre de visualisation de carte (200) en décalant la première zone de carte (205) vers une seconde zone de carte partiellement superposée (210) qui inclut à la fois une nouvelle zone de carte (220) et une portion (230) de la première zone de carte (205) qui contient un indicateur de localisation actuelle graphique (250) ;
dans lequel l'indicateur de localisation actuelle graphique repositionné est affiché au niveau d'une limite (280) d'une zone de carte avant (260) qui est à l'avant de l'indicateur de localisation actuelle graphique (250) et une zone de carte arrière (270) qui est à l'arrière de l'indicateur de localisation actuelle graphique (250), pour ainsi fournir plus de zones de carte dans une direction de déplacement avant ;
dans lequel les zones de carte (205,210,260,270) et l'indicateur de localisation actuelle graphique (250) sont affichés sur une piste haute de sorte que la direction de déplacement pointe verticalement vers le haut sur un écran ;
dans lequel repositionner l'indicateur de localisation actuelle graphique (250) comprend de déterminer une vitesse de direction de déplacement du dispositif mobile et de décaler automatiquement de la première zone de carte (205) à la seconde zone de carte (210) sur la base de la direction de déplacement et de la vitesse ; et
dans lequel une proportion dans laquelle l'indicateur de localisation actuelle graphique (250) est repositionné est proportionnelle à la vitesse du dispositif mobile ;
**caractérisé en ce que** :
repositionner l'indicateur de position graphique (250) comprend de déterminer la vitesse et la direction de déplacement du dispositif mobile en utilisant un récepteur GPS ;
dans lequel repositionner l'indicateur de localisation actuelle graphique prend en compte la route programmée et comprend de (i) calculer informatiquement un niveau de confiance relative à la direction de déplacement et (ii) utiliser le niveau de confiance pour varier le repositionnement de l'indicateur, moyennant quoi si le dispositif a zéro confiance, l'indicateur est déplacé vers une position par défaut centrale et si le dispositif a une confiance maximale, l'indicateur est déplacé vers un bord inférieur de la fenêtre de visualisation.

2. Procédé selon une quelconque des revendications précédentes, dans lequel le repositionnement comprend de décaler latéralement automatiquement et additionnellement de la première zone de carte (205) vers une zone de carte supplémentaires afin d'afficher un point présentant un intérêt dans la zone de carte supplémentaire qui n'était pas visible dans la première zone de carte (205).

3. Procédé selon une quelconque des revendications précédentes, dans lequel une zone de carte avant (260) qui est à l'avant de la limite (280) est affichée au niveau d'un premier niveau de zoom et une zone de carte arrière (270) qui est à l'arrière de la limite (280) est affichée à un second niveau de zoom.

4. Procédé selon une quelconque des revendications précédentes, comprenant en outre de : (i) détecter que le dispositif se trouve à l'intérieur d'une distance prédéterminée de la destination et en réponse à cela, (ii) amener le dispositif à afficher la seconde zone de carte ou une nouvelle zone de carte dans la direction avant dans une vue (en perspective) en 3D, avec la première zone de cartes montrant la localisation actuelle dans une vue 2D planaire standard.

5. Support lisible par ordinateur comprenant des instructions en code qui lorsqu'elles sont chargées dans une mémoire et exécutées par un processeur d'un dispositif informatique amènent le dispositif informatique à mettre en oeuvre le procédé selon une quelconque des revendications précédentes.

6. Dispositif mobile (100) comprenant :
un sous-système de détermination de position pour déterminer une localisation actuelle du dispositif mobile ; et
un processeur (110) couplé à une mémoire (120,130), le processeur étant configuré pour recevoir une destination, une route programmée étant associée à la destination ;
dans lequel le processeur est configuré pour amener un écran (150) à afficher dans une fenêtre de visualisation de carte (200) une première zone de carte (205) entourant la localisation actuelle du dispositif mobile et affichée sur la première zone de carte (205) un indicateur de localisation actuelle graphique représentant la localisation actuelle du dispositif mobile, la carte et l'indicateur de localisation actuelle graphique (250) étant affichés sur une piste haute de sorte que la direction de déplacement pointe verticalement vers le haut sur un écran ;
dans lequel le processeur est configuré pour coopérer avec l'écran pour repositionner l'indicateur de localisation actuelle graphique (250) par rapport à la fenêtre de visualisation de carte (200) en décalant la première zone de carte (205) vers une seconde zone de carte partiellement superposée (210) qui inclut à la fois une nouvelle zone de carte (220) et une portion (230) de la première zone de carte (205) qui contient l'indicateur de localisation actuelle graphique (250) ;
dans lequel l'indicateur de localisation actuelle graphique repositionné est affiché au niveau d'une limite (280) et d'une zone de carte avant (260) qui est à l'avant de l'indicateur de localisation actuelle géographique (250) et une zone de carte arrière (270), qui est à l'arrière de l'indicateur de localisation actuelle graphique (250), pour ainsi fournir plus de zones de carte dans une direction de déplacement avant ;
dans lequel les zones de carte (205,210,260,270) et l'indicateur de localisation actuelle graphique (250) sont affichées sur une piste haute de sorte que la direction de déplacement pointe verticalement vers le haut sur un écran ;
dans lequel repositionner l'indicateur de localisation actuelle graphique (250) comprend de déterminer une vitesse et une direction de déplacement du dispositif mobile et de décaler automatiquement de la première zone de carte (205) à la seconde zone de carte (210) sur la base de la direction de déplacement et de la vitesse ; et
dans lequel une proportion dans laquelle l'indicateur de localisation actuelle graphique (250) est repositionné est proportionnelle à la vitesse du dispositif mobile ;
**caractérisé en ce que** :
repositionner l'indicateur de position graphique (250) comprend de déterminer la vitesse et la direction de déplacement du dispositif mobile en utilisant un récepteur GPS ;
dans lequel repositionner l'indicateur de localisation actuelle graphique prend en compte la route programmée et comprend de (i) calculer informatiquement un niveau de confiance relative à la direction de déplacement et (ii) utiliser le niveau de confiance pour varier le repositionnement de l'indicateur, moyennant quoi si le dispositif a zéro confiance, l'indicateur est déplacé vers une position par défaut centrale et si le dispositif a une confiance maximale, l'indicateur est déplacé vers un bord inférieur de la fenêtre de visualisation.

7. Dispositif mobile selon la revendication 6, dans lequel le processeur est configuré pour décaler latéralement automatiquement et additionnellement de la première zone de carte (205) vers une zone de carte supplémentaire afin d'afficher un point présentant un intérêt dans la zone de carte supplémentaire qui n'était pas visible dans la première zone de carte (205).

8. Dispositif mobile selon une quelconque des revendications 6 à 7, dans lequel une zone de carte avant (260) qui est à l'avant de la limite (280) est affiché à un premier niveau de zoom et une zone de carte arrière (270) qui est à l'arrière de la limite (280) est affiché à un second niveau de zoom.
